# EUROPEAN PATENT APPLICATION

(11) **EP 3 211 776 A2**
(43) Date of publication of application: **30.08.2017**
(21) Application number: 17156024.6
(22) Date of filing: 14.02.2017
(51) Int. Cl.: H02M 1/12, H02P 29/50

(54) **ELECTRIC MOTOR DRIVE POWER SUPPLY AND CONTROL CIRCUIT AND AIR CONDITIONER**

(30) Priority: 29.02.2016 JP 2016038368
(71) Applicant: Mitsubishi Heavy Industries, Ltd., Minato-ku Tokyo (JP)
(72) Inventor: ADACHI, Naoya, TOKYO (JP)
(74) Representative: Intès, Didier Gérard André

(57) **Abstract**

It is possible to improve efficiency of an assembly of an air conditioner. An electric motor drive power supply and control circuit 1 includes primary side power lines α1 and α2 through which AC power is transmitted, a rectifier circuit 12 configured to rectify AC power, secondary side power lines β1 and β2 through which DC power rectified by the rectifier circuit 12 is transmitted, a switching power supply circuit 13 configured to generate air conditioner control power, a first noise filter unit 10 that is provided along at least one of the primary side power lines α1 and α2 and the secondary side power lines β1 and β2 and configured to remove noise that is removable by a ferrite core, and a second noise filter unit 11 that is provided along the primary side power lines α1 and α2 and configured to remove noise belonging to a lower frequency band than noise that is removable by the ferrite core.

## Description

### [Technical Field]

The present invention relates to an electric motor drive power supply and control circuit and an air conditioner.

### [Background Art]

In an air conditioning device (an air conditioner), mainly, an electric motor drive power supply and control circuit configured to generate and control drive power for driving a fan motor in which a power converting circuit is built in and the like from a commercial power supply is installed. In recent years, as the size of the entire device has been reduced, close proximity and contact between a wire (a primary side) to which the commercial power supply is connected and a wire (a secondary side) that is connected to the fan motor in which the power converting circuit is built in and the like may be inevitable in some cases. Here, since an electric motor such as a fan motor in which the power converting circuit is built in serves as a particularly large noise source, downsizing of the device may worsen the level of noise output to a power supply source (a commercial power supply).

As a countermeasure against this problem, reduction of noise transmitted to a primary side is attempted by attaching a ferrite core to a wire connected from the electric motor drive power supply and control circuit to the fan motor that serves as a noise source and in which the power converting circuit is built in.

In addition, in general, as a filter for noise that may be generated in a signal line of a low power system, a ferrite bead inductor and the like are known (for example, refer to Patent Literature 1).

### [Citation List]

### [Patent Literature]

[Patent Literature 1] Japanese Unexamined Utility Model Application, First Publication No. H 05-041221

### [Summary of Invention]

### [Technical Problem]

As described above, in recent years, in air conditioners (in indoor units, in particular) in which the size has been reduced, a space for installing a substrate on which a circuit configured to control an air conditioner is mounted, a fan motor in which a power converting circuit is built in, and the like has been extremely narrow. Therefore, a space available for an assembly of the air conditioner is limited. Therefore, it is difficult to perform a complex operation, for example, routing wires while attaching a ferrite core.

That is, in the assembly of the air conditioner, when attaching a ferrite core is required, efficiency of the assembly deteriorates.

The present invention provides an electric motor drive power supply and control circuit and an air conditioner by which it is possible to improve efficiency of an assembly of an air conditioner.

### [Solution to Problem]

According to an aspect of the present invention, there is provided an electric motor drive power supply and control circuit that is mounted on a substrate and configured to generate and control drive power for driving an electric motor in which a power converting circuit is built in from a commercial power supply, including: a primary side power line through which AC power from the commercial power supply is transmitted; a rectifier circuit configured to rectify the AC power transmitted through the primary side power line; a secondary side power line through which DC power obtained by rectifying the AC power by the rectifier circuit is transmitted toward the electric motor; a switching power supply circuit configured to generate a predetermined constant voltage from the DC power transmitted through the secondary side power line; a first noise filter unit that is provided along at least one of the primary side power line and the secondary side power line and configured to remove noise that is removable by a ferrite core; and a second noise filter unit that is provided along the primary side power line and configured to remove noise belonging to a lower frequency band than noise that is removable by the ferrite core.

In addition, according to an aspect of the present invention, the first noise filter unit is provided at a position closer to the commercial power supply than that of the switching power supply circuit along at least one of the primary side power line and the secondary side power line.

In addition, according to an aspect of the present invention, the first noise filter unit is provided at a position closer to the commercial power supply than that of the second noise filter unit along the primary side power line.

In addition, according to an aspect of the present invention, the first noise filter unit includes an inductor element that is connected in series along at least one of the primary side power line and the secondary side power line.

In addition, according to an aspect of the present invention, the substrate includes an opening between two inductor connection terminals on which the inductor element is mounted.

In addition, according to an aspect of the present invention, the inductor element is a ferrite bead inductor that is formed by passing a lead wire through a ferrite bead.

In addition, according to an aspect of the present invention, there is provided an air conditioner that includes the electric motor drive power supply and control circuit described above and the electric motor.

### [Advantageous Effects of Invention]

According to the above-described electric motor drive power supply and control circuit and air conditioner, it is possible to improve efficiency of an assembly of the air conditioner.

### [Brief Description of Drawings]

Fig. 1 is a diagram showing a circuit configuration of an electric motor drive power supply and control circuit according to a first embodiment.
Fig. 2 is a first diagram showing a structure of a first noise filter unit according to the first embodiment.
Fig. 3 is a second diagram showing a structure of a first noise filter unit according to the first embodiment.
Fig. 4 is a diagram showing a circuit configuration of an electric motor drive power supply and control circuit according to a comparative example of the first embodiment.
Fig. 5 is a diagram showing a circuit configuration of an electric motor drive power supply and control circuit according to a first modified example of the first embodiment.
Fig. 6 is a diagram showing a circuit configuration of an electric motor drive power supply and control circuit according to a second modified example of the first embodiment.
Fig. 7 is a diagram showing a circuit configuration of an electric motor drive power supply and control circuit according to a third modified example of the first embodiment.
Fig. 8 is a diagram showing a circuit configuration of an electric motor drive power supply and control circuit according to a fourth modified example of the first embodiment.

### [Description of Embodiments]

### <First embodiment>

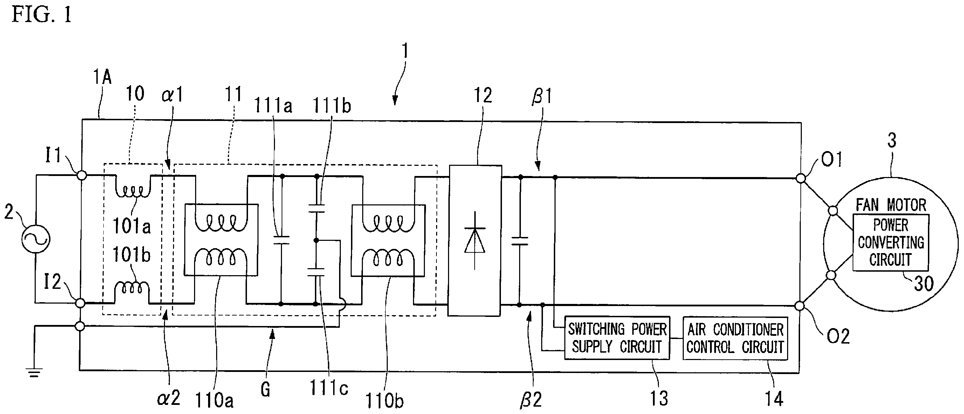

Hereinafter, an electric motor drive power supply and control circuit according to a first embodiment will be described with reference to Fig. 1 to Fig. 4.

### (Overall configuration of circuit)

Fig. 1 is a diagram showing a circuit configuration of an electric motor drive power supply and control circuit according to the first embodiment.

An electric motor drive power supply and control circuit 1 shown in Fig. 1 is an electric circuit configured to generate and control drive power for driving an electric motor (a fan motor 3) in which a power converting circuit 30 is built in from a commercial power supply 2. The electric motor drive power supply and control circuit 1 includes a plurality of electric circuit elements and is mounted on a substrate 1A. The substrate 1A is a general print substrate that is used to form an electric circuit.

As shown in Fig. 1, the commercial power supply 2, which is a commercial power supply, is connected to primary side connection terminals I1 and I2 of the electric motor drive power supply and control circuit 1. In addition, the fan motor 3 in which the power converting circuit 30 is built in is connected to secondary side connection terminals O1 and O2 of the electric motor drive power supply and control circuit 1. The electric motor drive power supply and control circuit 1 converts AC power supplied from the commercial power supply 2 into DC power for operating the electric motor (the fan motor 3 in which the power converting circuit 30 is built in), and outputs the converted power.

Here, "AC power supplied from the commercial power supply 2" is, for example, AC power of AC 200 V (50 Hz or 60 Hz) in this embodiment.

In this embodiment, the electric motor drive power supply and control circuit 1 and the fan motor 3 in which the power converting circuit 30 is built in shown in Fig. 1 are installed in an indoor device of air conditioning device (an air conditioner).

As shown in Fig. 1, the electric motor drive power supply and control circuit 1 includes a first noise filter unit 10, a second noise filter unit 11, a rectifier circuit 12, a switching power supply circuit 13, primary side power lines α1 and α2, and secondary side power lines β1 and β2.

AC power (AC 200 V) supplied from the commercial power supply 2 is transmitted from the primary side connection terminals I1 and I2 to the rectifier circuit 12 through the corresponding two primary side power lines α1 and α2. In addition, DC power is transmitted from the rectifier circuit 12 to the secondary side connection terminals O1 and O2 through the secondary side power lines β1 and β2.

The first noise filter unit 10 is a noise filter that is connected along the primary side power lines α1 and α2 and removes noise (a frequency band of 10 MHz to 1 GHz) that is removable by a ferrite core. A specific configuration of the first noise filter unit 10 will be described below.

The second noise filter unit 11 is a noise filter that is provided along the primary side power lines α1 and α2 and removes noise that belongs to a lower frequency band (for example, a frequency band of about 1 MHz) than noise that is removable by the ferrite core.

The second noise filter unit 11 includes common mode choke coils 110a and 110b that can reduce common mode noise superimposed on the primary side power lines α1 and α2 and capacitor elements 111a, 111b, and 111c connected between the primary side power lines α1 and α2 and a ground wire G.

The rectifier circuit 12 is a circuit that rectifies AC power (AC 200 V) transmitted through the primary side power lines α1 and α2, and for example, includes bridge-connected four diode elements. The rectifier circuit 12 outputs the rectified DC power to the secondary side power lines β1 and β2.

The secondary side power lines β1 and β2 transmit DC power that is obtained by rectifying AC power from the commercial power supply 2 by the rectifier circuit 12 toward the fan motor 3 through the secondary side connection terminals O1 and O2.

The switching power supply circuit 13 generates a predetermined constant voltage for air conditioner control from DC power (DC power rectified by the rectifier circuit 12) transmitted through the secondary side power lines β1 and β2. More specifically, the switching power supply circuit 13 is a power supply circuit configured to output a constant voltage necessary for an air conditioner control circuit 14 (a microcomputer) that controls overall operations of an indoor device in which the electric motor drive power supply and control circuit 1 and the fan motor 3 are installed. The switching power supply circuit 13 generates a constant voltage for the air conditioner control circuit 14 from DC power obtained through the rectifier circuit 12 based on a switching operation of a semiconductor switching element (not shown) included thererin.

The power converting circuit 30 built into the fan motor 3 is a power supply circuit configured to generate electric motor drive power from DC power that is transmitted through the secondary side power lines β1 and β2 and the secondary side connection terminals O1 and O2. The power converting circuit 30 can output a stabilized desired voltage level by controlling an on and off time ratio (a duty ratio) of a semiconductor switching element using a predetermined control unit.

### (Circuit configuration of first noise filter)

As shown in Fig. 1, the first noise filter unit 10 is provided at a position closer to the commercial power supply 2 than that of the second noise filter unit 11 along the primary side power lines α1 and α2.

The first noise filter unit 10 includes a ferrite bead inductor 101a that is connected in series along one primary side power line α1 that connects the commercial power supply 2 and the rectifier circuit 12 and a ferrite bead inductor 101b that is connected in series along the other primary side power line α2 that connects the commercial power supply 2 and the rectifier circuit 12.

Both the ferrite bead inductors 101a and 101 b in this embodiment have an inductance of about 0.5 to 1 µH and have impedance characteristics showing a high impedance in a frequency band of noise that is removable by the ferrite core.

### (Structure of first noise filter unit)

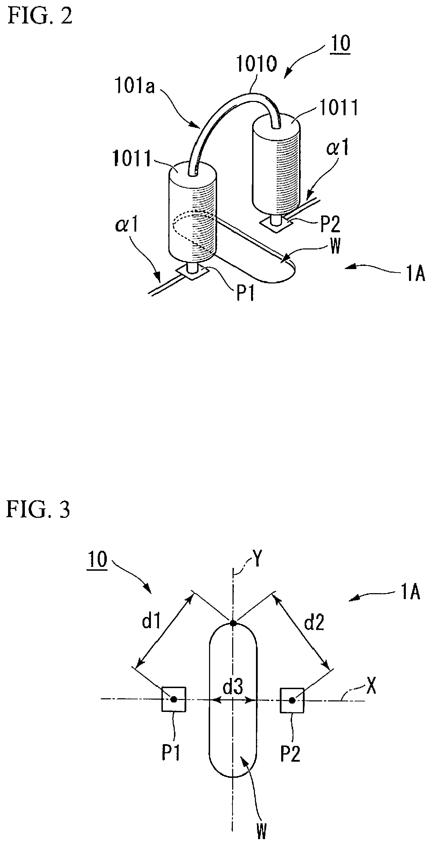

Fig. 2 and Fig. 3 are a first diagram and a second diagram showing a structure of a first noise filter unit according to the first embodiment, respectively.

Fig. 2 is a perspective view showing a structure of the ferrite bead inductor 101a of the first noise filter unit 10 and the substrate 1A in the vicinity thereof.

Fig. 3 is a plan view of an area in which the ferrite bead inductor 101a is mounted within the substrate 1A.

Next, a structure of the first noise filter unit 10 will be described with reference to Fig. 2 and Fig. 3.

As shown in Fig. 2, the ferrite bead inductor 101a includes a lead wire 1010 and two ferrite beads 1011.

The lead wire 1010 has an inverse U shape that passes through the two cylindrical ferrite beads 1011 and is connected in series along the primary side power line α1. Here, as shown in Fig. 2, the primary side power line α1 is insulated (physically disconnected) between an inductor connection terminal P1 and an inductor connection terminal P2 formed on the substrate 1A. One end of the lead wire 1010 is soldered at the inductor connection terminal P1 along the primary side power line α1. In addition, the other end of the lead wire 1010 is soldered at the inductor connection terminal P2 along the primary side power line α1. Therefore, the primary side power line α1 is connected through the lead wire 1010 of the ferrite bead inductor 101a.

As shown in Fig. 2 and Fig. 3, the substrate 1A includes an opening W between the two inductor connection terminals P1 and P2 on which the ferrite bead inductor 101a is mounted. The lead wire 1010 formed in an inverse U shape is connected between the inductor connection terminal P1 and the inductor connection terminal P2 so as to straddle the opening W.

As shown in Fig. 3, in a plane of the substrate 1 A, the opening W is a long hole opened in the substrate 1 A and has a shape whose short axis is an axis (an axis X in Fig. 3) connecting the inductor connection terminal P1 and the inductor connection terminal P2 and whose long axis is an axis (an axis Y in Fig. 3) orthogonal to a short axis direction. In this embodiment, the opening W is formed to satisfy an insulation performance that is defined by International Electrotechnical Commission (IEC) standards for power lines.

Specifically, a width d3 (an interval in the short axis direction) of the opening W is set to 1.6 mm. In addition, a distance d1 from a long axis direction end of the opening W to the inductor connection terminal P1 and a distance d2 from the long axis direction end of the opening W to the inductor connection terminal P2 are both set to 2 mm. Therefore, a creeping distance (a distance (dl+d2) along a surface of the substrate 1A) from the inductor connection terminal P1 to the inductor connection terminal P2 is set to 4 mm.

In this manner, as the opening W is provided in the substrate 1A, even if the ferrite bead inductor 101a malfunctions (is insulated), an insulation property is guaranteed from the inductor connection terminal P1 to the inductor connection terminal P2 along the primary side power line α1.

Also, since a structural relation between the ferrite bead inductor 101b and the primary side power line α2 is the same as that of the ferrite bead inductor 101a and the primary side power line α1, description thereof will be omitted.

### (Actions and effects)

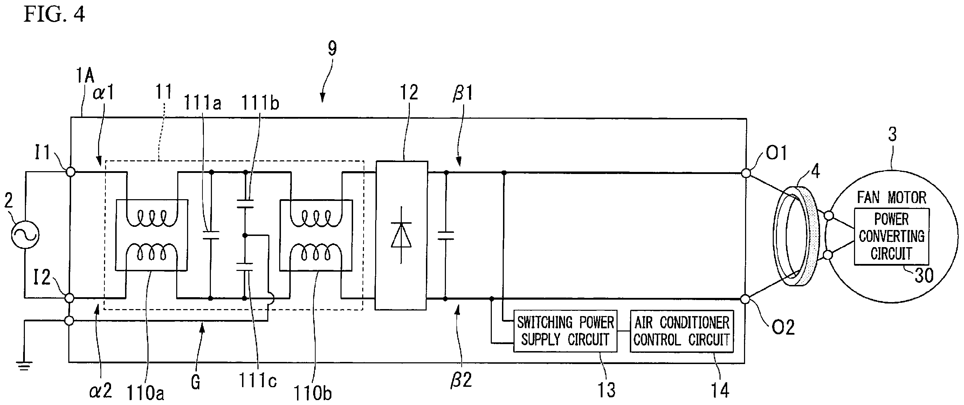

Fig. 4 is a diagram showing a circuit configuration of an electric motor drive power supply and control circuit according to a comparative example of the first embodiment.

As shown in Fig. 4, similarly to the electric motor drive power supply and control circuit 1, in an electric motor drive power supply and control circuit 9 according to a comparative example of the first embodiment, the commercial power supply 2 is connected to a primary side, and the fan motor 3 in which the power converting circuit 30 is built in is connected to a secondary side. In addition, a ferrite core 4 having a ring shape is attached to a wire that connects the secondary side connection terminals O1 and O2 of the electric motor drive power supply and control circuit 9 and the fan motor 3 in which the power converting circuit 30 is built in.

On the other hand, the first noise filter unit 10 is not provided in the electric motor drive power supply and control circuit 9.

Hereinafter, actions and effects of the electric motor drive power supply and control circuit 1 according to the first embodiment will be described in comparison with the electric motor drive power supply and control circuit 9 according to the comparative example.

First, in the comparative example (Fig. 4), since noise belonging to a predetermined frequency band (10 MHz to 1 GHz) within noise generated in the fan motor 3 in which the power converting circuit 30 is built in can be removed by the ferrite core 4, the noise is prevented from propagating to the electric motor drive power supply and control circuit 9. Accordingly, noise having a noise level belonging to the predetermined frequency band (10 MHz to 1 GHz) is prevented from propagating to the commercial power supply 2.

On the other hand, in the first embodiment (Fig. 1), since the ferrite core 4 is not attached, noise that is generated in the fan motor 3 in which the power converting circuit 30 is built in and belongs to the above frequency band propagates to the electric motor drive power supply and control circuit 1 through the secondary side connection terminals O1 and O2. The noise introduced into the electric motor drive power supply and control circuit 1 propagates to the primary side power lines α1 and α2 through the secondary side power lines β1 and β2 and the rectifier circuit 12. Here, noise belonging to the predetermined frequency band (10 MHz to 1 GHz) is not a target to be removed by the second noise filter unit 11 provided in the primary side power lines α1 and α2. Accordingly, noise having a noise level belonging to the above frequency band is not reduced by the second noise filter unit 11.

However, since the first noise filter unit 10 includes the ferrite bead inductor 101 having the two ferrite beads 1011 (Fig. 2), it is possible to remove noise that is removable by the ferrite core 4. Accordingly, noise having a noise level belonging to the predetermined frequency band (10 MHz to 1 GHz) is reduced by the first noise filter unit 10 and is prevented from propagating to the commercial power supply 2.

As described above, the electric motor drive power supply and control circuit 1 according to the first embodiment includes the first noise filter unit 10 that is provided along the primary side power lines α1 and α2 and removes noise that is removable by the ferrite core 4.

Therefore, it is possible to decrease a level of noise output to the commercial power supply 2 without the ferrite core 4. In addition, the first noise filter unit 10 is mounted on the substrate 1A in advance and does not require a complex assembling process when an assembly of the air conditioner is performed. Accordingly, it is possible to improve efficiency of an assembly of the air conditioner without worsening the level of noise in the commercial power supply 2.

In addition, the switching power supply circuit 13 including a semiconductor switching element also serves as a main noise generation source in addition to the fan motor 3 in which the power converting circuit 30 is built in.

Here, in the comparative example (Fig. 4), noise belonging to the predetermined frequency band (10 MHz to 1 GHz) within noise generated in the switching power supply circuit 13 propagates to the primary side power lines α1 and α2 through the secondary side power lines β1 and β2 and the rectifier circuit 12. Noise belonging to the predetermined frequency band (10 MHz to 1 GHz) is not a target to be removed by the second noise filter unit 11 provided in the primary side power lines α1 and α2. Accordingly, noise having a noise level belonging to the above frequency band is not reduced by the second noise filter unit 11.

As described above, noise belonging to the above predetermined frequency band within noise generated in the switching power supply circuit 13 is not reduced and directly propagates to the commercial power supply 2.

On the other hand, in the first embodiment (Fig. 1), noise belonging to the predetermined frequency band (10 MHz to 1 GHz) within noise generated in the switching power supply circuit 13 propagates to the primary side power lines α1 and α2 through the secondary side power lines β1 and β2 and the rectifier circuit 12. Therefore, noise having a noise level belonging to the predetermined frequency band is reduced by the first noise filter unit 10 and is prevented from propagating to the commercial power supply 2.

In this manner, the first noise filter unit 10 according to the first embodiment is provided at a position closer to the commercial power supply 2 than that of the switching power supply circuit 13.

In this manner, since it is possible to remove not only noise due to the fan motor 3 in which the power converting circuit 30 is built in but also noise generated in the switching power supply circuit 13, it is possible to improve a noise level in the commercial power supply 2.

In addition, the electric motor drive power supply and control circuit 9 according to the comparative example (Fig. 4) also has the second noise filter unit 11 configured to remove noise belonging to a lower frequency band than noise that is removable by the ferrite core 4. Here, as shown in Fig. 4 (Fig. 1), the second noise filter unit 11 includes a plurality of passive elements (an inductor element and a capacitor element). Therefore, for example, when a wire that is connected to the fan motor 3 in which the power converting circuit 30 is built in and the primary side power lines α1 and α2 are provided in close proximity, due to a stray capacitance generated accordingly and the like, an unexpected resonance circuit is formed in the second noise filter unit 11, and noise belonging to the predetermined frequency band (10 MHz to 1 GHz) is assumed to be excited and propagate to the commercial power supply 2.

On the other hand, the first noise filter unit 10 (Fig. 1) according to the first embodiment is provided at a position closer to the commercial power supply 2 than that of the second noise filter unit 11 along the primary side power lines α1 and α2.

In this manner, the first noise filter unit 10 can also reduce noise that propagates through the stray capacitance and the second noise filter unit 11 from the fan motor 3 in which the power converting circuit 30 is built in as described above.

In addition, in the electric motor drive power supply and control circuit 1 according to the first embodiment, within the substrate 1A, the opening W is provided between the two inductor connection terminals P1 and P2 on which the ferrite bead inductor 101 is mounted.

Therefore, an insulation property is guaranteed from the inductor connection terminal P1 to the inductor connection terminal P2 along the primary side power line α1 (α2).

In addition, the electric motor drive power supply and control circuit 1 according to the first embodiment uses the ferrite bead inductors 101a and 101b that are formed by passing the lead wire 1010 through the two ferrite beads 1011 as inductor elements of the first noise filter unit 10.

In this manner, as a lead type ferrite bead inductor is used, it is possible to easily perform a mounting (soldering) process on the inductor connection terminals P1 and P2 disposed to sandwich the opening W therebetween.

### <Modified examples of first embodiment>

The electric motor drive power supply and control circuit 1 according to the first embodiment has been described above in detail. However, a specific form of the electric motor drive power supply and control circuit 1 is not limited to the above-described form, and various design modifications and the like can be added without departing from the scope of the invention.

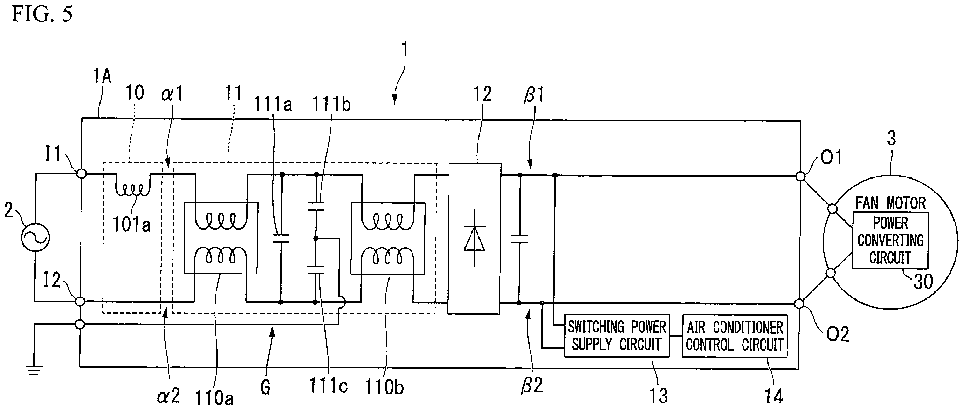

Fig. 5 is a diagram showing a circuit configuration of an electric motor drive power supply and control circuit according to a first modified example of the first embodiment.

As shown in Fig. 5, the first noise filter unit 10 according to the first modified example is different from that of the first embodiment (Fig. 1) in that the ferrite bead inductor 101b is not included and only the ferrite bead inductor 101 a connected to the primary side power line α1 is included.

In this manner also, the ferrite bead inductor 101a can remove noise that propagates along the primary side power line α1. In addition, since it is possible to reduce the number of components compared to that in the first embodiment, it is possible to reduce an area of the electric motor drive power supply and control circuit 1.

In addition, another modified example may have a form in which the first noise filter unit 10 does not include the ferrite bead inductor 101 a, and only includes the ferrite bead inductor 101b connected to the primary side power line α2.

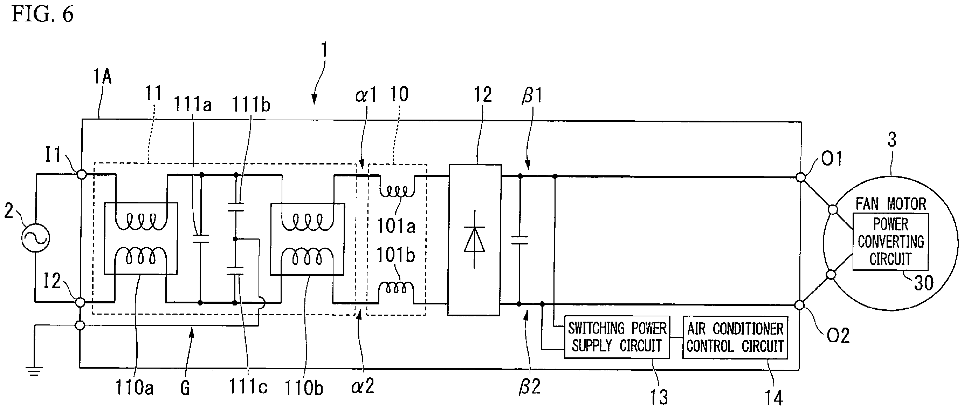

Fig. 6 is a diagram showing a circuit configuration of an electric motor drive power supply and control circuit according to a second modified example of the first embodiment.

As shown in Fig. 6, the first noise filter unit 10 according to the second modified example is different from the first embodiment (Fig. 1) in that it is provided at a position (a position close to the rectifier circuit 12) further from the commercial power supply 2 than the second noise filter unit 11 along the primary side power lines α1 and α2.

In this manner also, it is possible to obtain an effect of removing noise that propagates along the primary side power lines α1 and α2 using the ferrite bead inductors 101a and 101b.

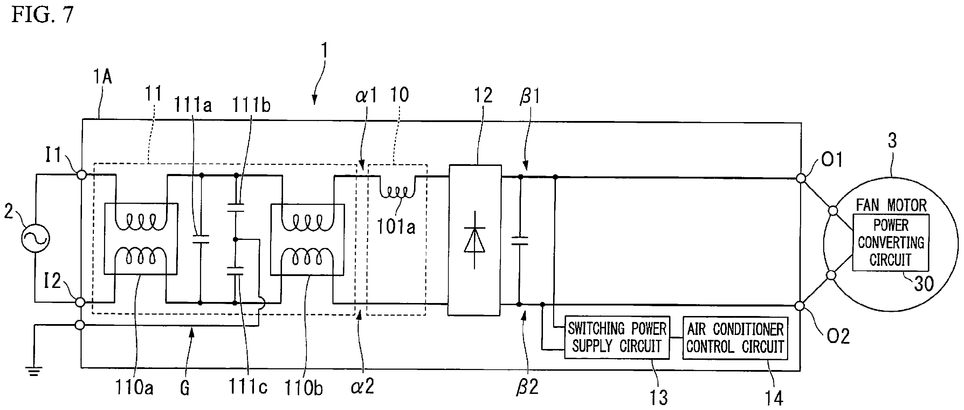

Fig. 7 is a diagram showing a circuit configuration of an electric motor drive power supply and control circuit according to a third modified example of the first embodiment.

Similarly to the second modified example (Fig. 6), the first noise filter unit 10 according to the third modified example is provided at a position further from the commercial power supply 2 than the second noise filter unit 11 along the primary side power lines α1 and α2. However, as shown in Fig. 7, the first noise filter unit 10 according to the third modified example is different from the second modified example (Fig. 6) in that the ferrite bead inductor 101b is not included and only the ferrite bead inductor 101a connected to the primary side power line α1 is included.

In this manner also, it is possible to remove noise that propagates along the primary side power line α1 using the ferrite bead inductor 101a. In addition, since the number of components is smaller than that in the first embodiment and the second modified example, it is possible to reduce an area of the electric motor drive power supply and control circuit 1.

In addition, still another modified example may have a form in which the first noise filter unit 10 is provided at a position further from the commercial power supply 2 than the second noise filter unit 11 and does not include the ferrite bead inductor 101a and only includes the ferrite bead inductor 101b connected to the primary side power line α2.

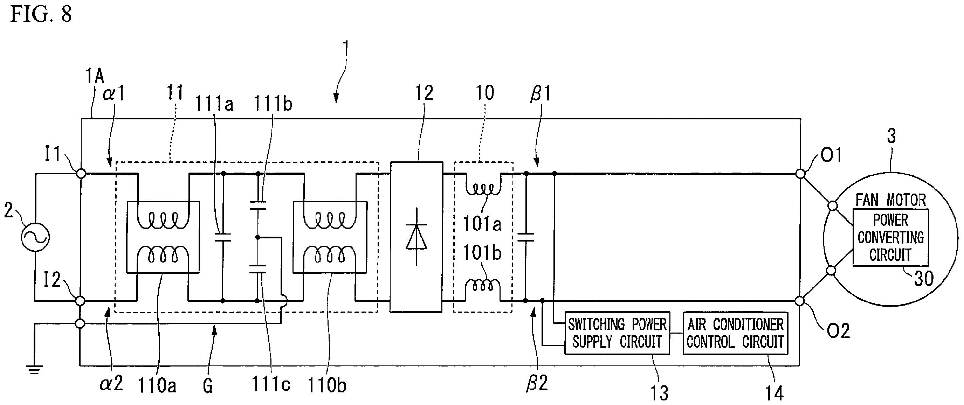

Fig. 8 is a diagram showing a circuit configuration of an electric motor drive power supply and control circuit according to a fourth modified example of the first embodiment.

As shown in Fig. 8, the first noise filter unit 10 according to the fourth modified example is different from that of the first embodiment (Fig. 1) in that it is provided between the rectifier circuit 12 and the switching power supply circuit 13 along the secondary side power lines β1 and β2.

In this manner also, it is possible to obtain an effect of removing noise that propagates along the secondary side power lines β1 and β2 using the ferrite bead inductors 101a and 101b.

Yet another modified example may have a form in which the first noise filter unit 10 does not include the ferrite bead inductor 101b along the secondary side power lines β1 and β2 and only includes the ferrite bead inductor 101a connected to the primary side power line α1. In addition, yet another modified example may have a form in which the first noise filter unit 10 does not include the ferrite bead inductor 101a along the secondary side power lines β1 and β2 and only includes the ferrite bead inductor 101b connected to the primary side power line α2.

In addition, yet another modified example may have a form in which a plurality of first noise filter units 10 are provided along at least one of the primary side power lines α1 and α2 and the secondary side power lines β1 and β2 (for example, a combination form of the first embodiment (Fig. 1), the above-described second modified example (Fig. 6), and the above-described fourth modified example (Fig. 8)).

In addition, while inductor elements of the first noise filter unit 10 according to the first embodiment have been described as the ferrite bead inductors 101a and 101b, other embodiments are not limited to this form.

That is, the first noise filter unit 10 according to another modified example may be a noise filter circuit that is adjusted to remove noise that is removable by a ferrite core according to a combination of passive elements such as an inductor element other than a ferrite bead inductor and a capacitor element.

In addition, while a form in which the ferrite bead inductors 101a and 101b of the first noise filter unit 10 according to the first embodiment include the lead wire 1010 and the two ferrite beads 1011 has been described, other embodiments are not limited to this form.

The ferrite bead inductors 101a and 101b according to another embodiment may have a form in which, for example, one or three or more ferrite beads 1011 are included.

While several embodiments of the present invention have been described above, such embodiments are only examples and are not intended to limit the scope of the invention. Such embodiments can be implemented in various other forms, and various omissions, substitutions, and modifications can be made without departing from the scope of the invention. Such embodiments and modifications thereof are included in the scope and spirit of the invention, and are included in the invention described in the appended claims and equivalents thereof.

### [Reference Signs List]

1 electric motor drive power supply and control circuit
1A substrate
10 first noise filter unit
101a, 101b ferrite bead inductors (inductor elements)
1010 lead wire
1011 ferrite bead
11 second noise filter unit
110a, 110b common mode choke coils
111a, 111b, 111c capacitor elements
12 rectifier circuit
13 switching power supply circuit
14 air conditioner control circuit
2 commercial power supply
3 fan motor (electric motor drive)
30 power converting circuit
4 ferrite core
9 electric motor drive power supply and control circuit
I1, I2 primary side connection terminal
O1, O2 secondary side connection terminal
P1, P2 inductor connection terminal
α1, α2 primary side power line
β1, β2 secondary side power line
G ground wire
W opening

## Claims

1. An electric motor drive power supply and control circuit (1) that is mounted on a substrate (1A) and configured to generate and control drive power for driving an electric motor (3) in which a power converting circuit (30) is built in from a commercial power supply (2), comprising:
a primary side power line (α1, α2) through which AC power from the commercial power supply (2) is transmitted;
a rectifier circuit (12) configured to rectify the AC power transmitted through the primary side power line (α1, α2);
a secondary side power line (β1, β2) through which DC power obtained by rectifying the AC power by the rectifier circuit (12) is transmitted toward the electric motor (3);
a switching power supply circuit (13) configured to generate a predetermined constant voltage from the DC power transmitted through the secondary side power line (β1, β2);
a first noise filter unit (10) that is provided along at least one of the primary side power line (α1, α2) and the secondary side power line (β1, β2) and configured to remove noise that is removable by a ferrite core (4); and
a second noise filter unit (11) that is provided along the primary side power line (α1, α2) and configured to remove noise belonging to a lower frequency band than noise that is removable by the ferrite core (4).

2. The electric motor drive power supply and control circuit (1) according to claim 1,
wherein the first noise filter unit (10) is provided at a position closer to the commercial power supply (2) than that of the switching power supply circuit (13) along at least one of the primary side power line (α1, α2) and the secondary side power line (β1, β2).

3. The electric motor drive power supply and control circuit (1) according to claim 1,
wherein the first noise filter unit (10) is provided at a position closer to the commercial power supply (2) than that of the second noise filter unit (11) along the primary side power line (α1, α2).

4. The electric motor drive power supply and control circuit (1) according to any one of claims 1 to 3,
wherein the first noise filter unit (10) includes an inductor element (101a, 101b) that is connected in series along at least one of the primary side power line (α1, α2) and the secondary side power line (β1, β2).

5. The electric motor drive power supply and control circuit (1) according to claim 4,
wherein the substrate (1A) includes an opening between two inductor connection terminals (P1, P2) on which the inductor element (101a, 101b) is mounted.

6. The electric motor drive power supply and control circuit (1) according to claim 4 or 5,
wherein the inductor element (101a, 101b) is a ferrite bead inductor that is formed by passing a lead wire (1010) through a ferrite bead (1011).

7. An air conditioner comprising:
the electric motor drive power supply and control circuit (1) according to any one of claims 1 to 6; and
the electric motor (3).
